# EUROPEAN PATENT SPECIFICATION

(11) **EP 1 281 126 B1**
(45) Date of publication and mention of the grant of the patent: **23.02.2011**
(21) Application number: 01924067.0
(22) Date of filing: 25.04.2001
(51) Int. Cl.: G06F 13/38

(54) **METHOD FOR BI-DIRECTIONAL COMMUNICATION, A LOCAL NETWORK THEREFORE AND A MOTOR VEHICLE**
VERFAHREN ZUR BIDIREKTIONALEN KOMMUNIKATION, LOKALES NETZWERK DAFÜR UND KRAFTFAHRZEUG
PROCEDE DE COMMUNICATION BIDIRECTIONNELLE, RESEAU LOCAL A CET EFFET AND VEHICULE AUTOMOBILE

(30) Priority: 25.04.2000 SE 0001491
(43) Date of publication of application: 05.02.2003
(73) Proprietor: Scania CV AB, 151 87 Södertälje (SE)
(72) Inventor: LIND, Hans, S-125 58 Älvsjö (SE); FORSGREN, Mats, S-151 46 Södertälje (SE); BERGQVIST, Ola, S-131 40 Nacka (SE)
(86) International application number: PCT/SE2001/000883
(87) International publication number: WO 2001/086459

(56) References cited:
- EP-A2- 0 482 959
- US-A- 4 787 040
- US-A- 5 809 220

## Description

### FIELD OF THE INVENTION

The present invention concerns a method of two-way communication according to the preamble of claim 1, a local area network (LAN) according to the preamble of claim 6 and to a motor vehicle including a LAN.

### DESCRIPTION OF. PRIOR ART

In motor vehicles such as cars, busses, tractors and trucks, until recently, only a single electric conducting cable has been used for transmission of information between two electrical modules. This means that the number of cables between these modules increase in proportion to the number of information signals to be exchanged between them.

In order to reduce the number of cables that have to be drawn between electrical and electronic modules positioned in different positions in a vehicle, local area networks (LAN), have recently been used. A typical local area network for motor vehicles has a plurality of nodes (modules) connected to each other over a communication bus. Serial data may be transmitted over said communication bus. The nodes decode received data into specific instructions and control different manoeuvring means and lamps as a response to said specific instructions.

In the typical local area network for motor vehicles, each one of the nodes includes a microprocessor and a communication circuit. The microprocessor and the communication circuit are generally integrated on the same chip. The communication circuit functions so as to send and receive data to and from, respectively, the communication bus. The microprocessor receives data over a communication circuit and decodes received data into specific instructions. Different -manoeuvring means and lamps belonging to the node are controlled by the microprocessor as a response to the specific instructions. Further, each node is provided with system specific sensors which results in the total system being sensitive as well as correspondingly increases costs for doubled functions and drawing of cables.

A drawback with a local area network according to the above is that the different nodes along the communication bus may affect each other which may result in breakdown of the network and that different highly essential functions for the vehicle may be out of function.

From US-A-4 787 040 there is previously known a display system for vehicles, wherein a separation of nodes between two busses is described. This separation is, however, based on the type of traffic present on the respective bus and on the communication to a certain node. Thus, nodes from which a response is requested are positioned along the "poll/response" bus, whereas non time-controlled nodes are positioned along the "random access" bus. It should thus be noted that assigning of the nodes to the different busses in the system according to the US-document is not decided by the functionality of the nodes, much less to what extent the communication to certain nodes or between certain nodes is critical.

### BRIEF DESCRIPTION OF THE INVENTION

It is an aim of the present invention to provide an enhanced method of two-way communication in a motor vehicle, which overcomes or at least reduces the above mentioned problem.

It is also an aim of the present invention to provide an enhanced local area network in a motor vehicle which overcomes or at least reduces the above mentioned problem.

According to the present invention this aim is achieved by providing a method of two-way communication according to claim 1, a local area network according to claim 6 and a motor vehicle according to claim 10.

An advantage of the present invention is that it increases security of the vehicle compared to previous technology. Another advantage of the present invention is that different communication busses may be used for different purposes, that is that a cheaper and not quite as fast communication bus may be used for less important communication and that a more expensive and faster communication bus may be used for more important communication resulting in that the total cost may be reduced compared to prior art technology.

A further advantage of the present invention is that the number of nodes along one and the same communication bus more easily may be adjusted into the number which as little as possible detrimentally affects the functionality, speed and security of the communication bus.

### DESCRIPTION OF THE DRAWINGS

Fig. 1 shows a coupling diagram over a local area network (LAN) according to a first embodiment of the invention.
Fig. 2 shows a coupling diagram over a local area network (LAN) according to a second embodiment of the invention.

### PREFERRED EMBODIMENTS

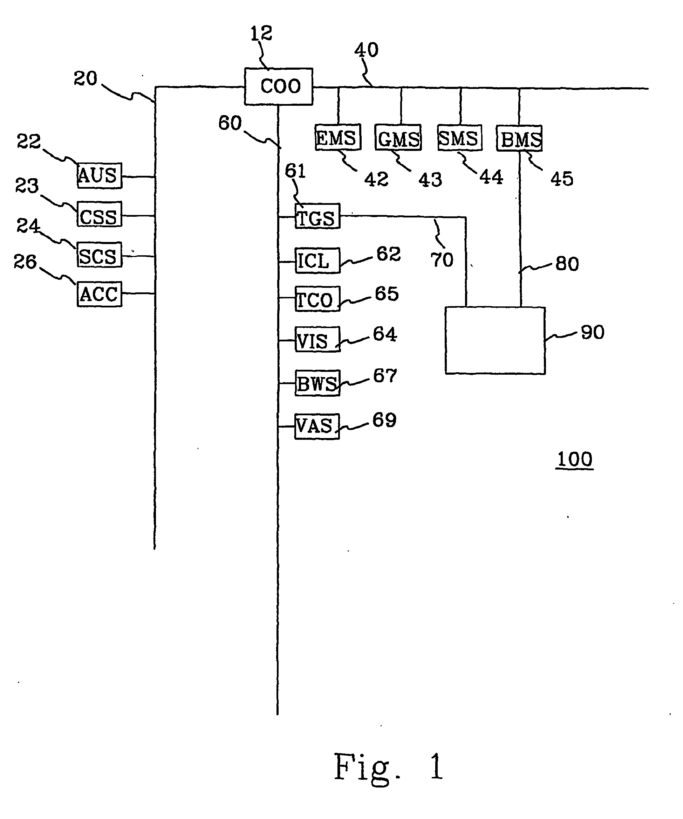

In Fig. 1 a first embodiment of a local area network (LAN) 100 in a motor vehicle according to the invention is shown. The local area network includes three communication busses 20, 40, 60. To the first communication bus 20 there are allocated four nodes 22, 23, 24, 26, each one performing all or part of a function belonging to a predefined group at a low-critical level. To the second communication bus 60 there are allocated six nodes 61, 62, 64, 65, 67, 69, each one performing all or part of a function belonging to a predefined group at a semi-critical level. To the third communication bus 40 there are allocated four nodes 42, 43, 44, 45, each one performing all or part of a function belonging to a predefined group at a high-critical level. Said critical levels reflect the importance of the function for the security of the motor vehicle in its use. A function which is depending on information from other nodes may belong to each one of the above mentioned groups. For example the function belongs to the group high-critical level if said information from one or more of the other nodes is essential for the function and the function as such belongs to the predefined group at the high-critical level. Nodes exchanging information which is essential for a function on a high-critical level, are arranged along one and the same bus.

To the first communication bus there are arranged a AUS (Audio system) node 22 which provides the audio functions for the vehicle, a CSS (Crash Safety system) node 23, which stands for the crash safety functions for the vehicle, a SCS (Seat Control System) node 24, which provides the chair functions of the vehicle, an ACC (Automatic Climate Control) node 26, which provides the climate functions for the vehicle.

In all these nodes there are a microprocessor and a communication circuit which generally are integrated on the same chip. The communication circuit serves to send and receive data to and from respectively the communication bus. The microprocessor receives data over the communication circuit and decodes received data into specific instructions. Different manoeuvring means and lamps belonging to the node are controlled by a microprocessor as a response to the specific instructions.

Breakdown of the communication to or from any of the nodes that are arranged along the first communication bus does not result in any direct danger or any restrain against driving the vehicle, and therefore the driver may continue driving although any of these functions has gone out of function. The driver of the vehicle may be informed about the breakdown of the function visually on for example a display or audibly over for example the vehicle radio system.

To the second communication bus there are arranged a TGS (Trailer Gateway System) node 61, which stands for the vehicle communication with the trailer system, an ICL (Instrument Cluster Function) node 62, which stands for the instrument functions of the vehicle, a TCO (Tachograph System) node 65, which stands for the log functions of the vehicle and of the driver, a VIS (Visibility System) node 64, which stands for the light functions of the vehicle, a BWS (Body Works System) node 67, which stands for vehicle communication with additional systems, a VAS (Vehicle Alarm System) node 69, which stands for the alarm functions of the vehicle.

In these nodes there are arranged, similar to what has been described in connection with nodes belonging to the first communication bus, a microprocessor and a communication circuit which generally are integrated onto the same chip.

The breakdown of the communication to or from any of the nodes arranged on the second communication bus will not result in any direct danger but may be an obstacle against driving the vehicle, but the driver should as soon as possible try to correct the error when any of the functions of these nodes has gone out of function. The driver of the vehicle may, as is described above, be informed about the breakdown of the function visually on for example the display or audibly over for example the radio system of the vehicle.

At the third communication bus there are arranged an EMS (Engine Management System) node 42, which stands for the motor functions of the vehicle, a GMS (Gearbox Management System) node 43, which stands for the gearbox functions of the vehicle, an SMS (Suspension Management System) node 44, which stands for the suspension functions of the vehicle, a BMS (Brake Management System) node 45, which stands for the brake functions of the vehicle.

Breakdown of the communication to or from any of the nodes provided on the third communication bus 40 results in a direct danger or an obstacle for driving the vehicle and the driver should immediately stop the vehicle when any of these functions/nodes have gone out of function. The driver of the vehicle may, as is described above, be informed about the breakdown of the function visually on for example display or audibly over for example the radio system of the vehicle.

The first 20, the second 60 and the third 40 communication bus are connected to each other over a so called COO (Co-ordinator System) node or gateway node 12, which stands for the local area network gateway function. In said COO node 12 there is implemented a fire-wall functionality. Such a fire-wall functionality serves so as not to send signals from one bus to the other if this is not specifically intended.

Through the COO node 12 the different busses in the local area network are physically separated. This means that the COO node transfers information further to the "correct" node and protects a certain bus from being loaded with too much information from another bus. As an example data from EMS is transferred and addressed further in a certain form, for example lower updating speed, to ICL for display.

Through the invention it is allowed that sensors are shared between different nodes. As an example one single sensor, such as a speed sensor, may be used for all nodes in the vehicle. This sensor may be centrally connected directly to the COO node or to any other node depending on suitable positioning. This results in a great advantage over prior art arrangements wherein it has been necessary to use multiple sensors.

The communication bus may for example be a co-axial cable, a plurality of metallic conductors or one or several optic fibres. Different types of communication busses may be possible to use as the first, second and third communication bus. For example, the first bus may be comprised of a plurality of metallic conductors, the second bus of a co-axial cable and the third bus of an optic fibre. Different protocols may also be used for the different busses. The COO node includes necessary converting functionality for converting from one protocol to another protocol according to per se known art.

Connections to the nodes along the first communication bus may be made more simple than to the second communication bus which in turn are more simple than those of the third communication bus. The communication bus including connections to nodes with communication that is critical for driving the vehicle may be drawn/placed on a more secure position in the vehicle than the other busses, which do not include connections to nodes with communication that is critical for driving the vehicle. With secure position here is intended such a place in the vehicle where such a communication bus simply does not directly may be subject to mechanical damage/wear.

In Fig. 1 there is also shown a node 90, which in this case represents of a trailer which is connected to the vehicle. To the trailer there is a connection 80 to the BMS node 45 of the third communication bus 40 and a connection 70 to the TGS node 61 of the second communication bus 60.

Two-way communication between different nodes along the communication busses may be according to different protocols, for example CAN (Controller Area Network), VAN (Vehicle Area Network) or any other protocol with similar functionality.

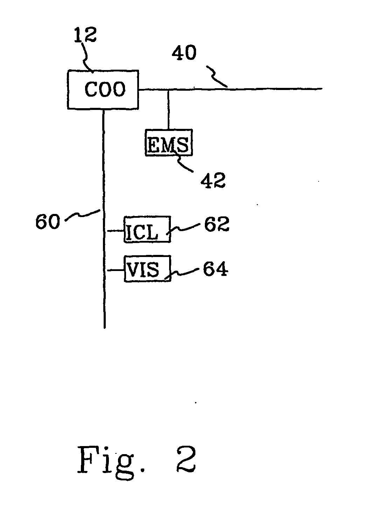

In Fig. 2 there is shown a second embodiment of a local area network 100 in a vehicle according to the invention. In this network only the functions that are most important for the vehicle has been connected to the inventive local area network. In this embodiment there are only two different busses which correspond to the second and the third bus in Fig. 1. To the second bus 60 there are arranged an ICL (Instrument Cluster System) node 62 and a VIS (Visibility System) node 64. To the third bus 40 there is arranged an EMS (Engine Management System) node 42. The communication busses have been connected to each other over a COO (Co-ordinator System)-node.

An example of a high-critical communication concerns motor control. An example of semi-critical communication concerns display of different running data. An example of low-critical communication may concern the climate system of the vehicle. The communication may be time-critical, for example accelerator pedal position or the gear system co-operation with the engine, or safety critical, for example concerning certain information from the brake system of the vehicle.

In messages from different nodes there are contained information about the function of the node, from which it is clear whether any node has a functional error.

In the above-described embodiments only local networks including two or three different busses have been shown. Of course this number of different communication busses may be extended to considerably more if desired.

## Claims

1. A method of two-way communication between different nodes arranged at different positions in a vehicle, where information in the form of binary symbols is sent on at least two serial communication busses connecting said nodes,
**characterised in that** the method includes the following steps:
- separating said nodes into at least two groups where communication between nodes belonging to one group is more or less critical for the security of the motor vehicle when driving the vehicle with respect to communication between the nodes in another group;
- connecting said different groups of nodes to different communication busses where one end of each bus is connected to a gateway node; and
- transferring the gateway node information within one bus to nodes which are intended for reception of the informations and which are connected to another bus.

2. A method according to claim 1, **characterised in** using different protocols with respect to the different communication busses.

3. A method according to claim 2, **characterised in** converting the protocols which are used in the different communication busses in the gateway node.

4. A method according to any of the previous claims,
wherein the groups are at least two of: high-critical, semi-critical and low-critical.

5. A local area network (LAN) for two-way communication between different nodes included in said local area network and arranged in different positions in a vehicle, where information in the form of binary symbols are sent on at least two serial communication busses connecting said nodes,
**characterised in that** said nodes in said local area network are separated into at least two groups where the communication between the nodes belonging to one group is more or less critical for the security of the motor vehicle when driving the vehicle with respect to the communication between the nodes in another group, at that said different groups of nodes are connected to different communication busses (20,40,60), where one end of each bus is connected to a gateway node (12), and that the gateway node is arranged to transfer information within one bus to nodes which are intended for reception of the information and which are connected to another bus.

6. A local area network according to claim 5, wherein said gateway node (12) includes a fire-wall functionality which physically and logically separates said different communication busses (20, 40, 60) .

7. A local area network according to claim 5 or 6, wherein the network includes a warning system, which signals visually or audibly in the event of an error in any node or in any communication bus.

8. A local area network according to any of the claims 5 - 7, wherein a communication bus allocated with nodes with more critical communication is arranged more securely in the vehicle compared to a communication bus allocated with nodes with less critical communication.

9. A motor vehicle including a LAN according to any of the claims 5 - 8.

## Patentansprüche

1. Verfahren zur bidirektionalen Kommunikation zwischen verschiedenen, an verschiedenen Positionen in einem Kraftfahrzeug angeordneten Knoten, wobei Informationen in Form von binären Symbolen über zumindest zwei, die Knoten verbindende serielle Kommunikations-Busse übertragen werden,
**dadurch gekennzeichnet, dass** das Verfahren die folgenden Schritte umfasst:
- Aufteilen der Knoten in zumindest zwei Gruppen, wobei die Kommunikation zwischen zu einer Gruppe gehörender Knoten mehr oder weniger kritisch für die Sicherheit des Kraftfahrzeugs während dem Fahren des Kraftfahrzeugs in Bezug auf die Kommunikation zwischen den Knoten in der anderen Gruppe ist;
- Verbinden der verschiedenen Gruppen von Knoten mit verschiedenen Kommunikations-Bussen, wobei ein Ende von jedem Bus mit einem Schnittstellen-Knoten verbunden ist; und
- Übertragen der Schnittstellen-Knoten-Informationen Innerhalb eines Busses zu Knoten, die für den Erhalt der Informationen bestimmt und mit einem anderen Bus verbunden sind.

2. Verfahren nach Anspruch 1, **gekennzeichnet durch** Verwenden verschiedener Protokolle in Bezug auf die verschiedenen Kommunikations-Busse.

3. Verfahren nach Anspruch 2, **gekennzeichnet durch** Konvertieren der Protokolle in dem Schnittstellen-Knoten, welche in den verschiedenen Kommunikations-Bussen verwendet werden.

4. Verfahren nach einem der vorhergehenden Ansprüche, wobei die Gruppen zumindest zwei der folgenden Gruppen sind:
- hochkritisch und/oder
- halbkritisch und/oder
- niederkritisch.

5. Lokales Netzwerk (Local Area Network - LAN) zur bidirektionalen Kommunikation zwischen verschiedenen, in dem lokalen Netzwerk enthaltenen und an verschiedenen Positionen in einem Kraftfahrzeug angeordneten Knoten, wobei Informationen in Form von binären Symbolen über zumindest zwei, die Knoten verbindende serielle Kommunikations-Busse übertragen werden,
**dadurch gekennzeichnet, dass** die Knoten in dem lokalen Netzwerk in zumindest zwei Gruppen aufgeteilt sind, wobei die Kommunikation zwischen den zu einer Gruppe gehörenden Knoten mehr oder weniger kritisch für die Sicherheit des Kraftfahrzeugs während dem Fahren des Kraftfahrzeugs in Bezug auf die Kommunikation zwischen den Knoten in der anderen Gruppe ist, dass die verschiedenen Gruppen von Knoten mit verschiedenen Kommunikations-Bussen (20, 40, 60) verbunden sind, wobei ein Ende von jedem Bus mit einem Schnittstellen-Knoten (12) verbunden ist, und dass der Schnittstellen-Knoten dazu eingerichtet ist, Informationen innerhalb eines Busses zu Knoten, die für den Empfang der Informationen bestimmt sind und die mit einem anderen Bus verbunden sind, zu übertragen.

6. Lokales Netzwerk nach Anspruch 5, wobei der Schnittstellen-Knoten (12) eine Firewall-Funktion aufweist, welche die verschiedenen Kommunikations-Busse (20, 40, 60) physisch und logisch trennt.

7. Lokales Netzwerk nach Anspruch 5 oder 6, wobei das Netzwerk ein Warnsystem aufweist, welches im Fall einer Störung in einem der Knoten oder in einem der Kommunikations-Busse dies visuell oder akustisch signalisiert.

8. Lokales Netzwerk nach einem der Ansprüche 5 bis 7, wobei ein Knoten mit kritischerer Kommunikation zugeordneter Kommunikations-Bus sicherer im Kraftfahrzeug angeordnet ist, als ein Knoten mit weniger kritischer Kommunikation zugeordneter Kommunikations-Bus.

9. Kraftfahrzeug umfassend ein lokales Netzwerk (LAN) nach einem der Ansprüche 5 bis 8.

## Revendications

1. Procédé de communication bidirectionnel entre différents noeuds situés à différentes positions dans un véhicule, où des informations se présentant sous la forme de symboles binaires sont envoyées sur au moins deux bus de communication série connectant lesdits noeuds, **caractérisé en ce que** le procédé comprend les étapes suivantes :
- séparation desdits noeuds en au moins deux groupes, où les communications entre des noeuds appartenant à l'un des groupes est plus ou moins critique pour la sécurité du véhicule à moteur lors de la conduite de celui-ci par rapport aux communications entre les noeuds d'un autre groupe ;
- connexion desdits différents groupes de noeuds à différents bus de communication, où une extrémité de chaque bus est connectée à un noeud passerelle ; et
- transfert des informations du noeud passerelle, à l'intérieur d'un bus, aux noeuds qui sont destinés à recevoir les informations et qui sont connectés à un autre bus.

2. Procédé selon la revendication 1, **caractérisé par** l'utilisation de protocoles différents en relation avec les différents bus de communication.

3. Procédé selon la revendication 2, **caractérisé par** la conversion des protocoles qui sont utilisés dans les différents bus de communication dans le noeud passerelle.

4. Procédé selon l'une quelconque des revendications précédentes, dans lequel les groupes sont au moins deux des groupes suivants :
hautement critique, semi-critique et faiblement critique.

5. Réseau local (LAN) pour une communication bidirectionnelle entre différents noeuds inclus dans ledit réseau local et situés à différentes positions dans un véhicule, où des informations se présentant sous la forme de symboles binaires sont envoyées sur au moins deux bus de communication série connectant lesdits noeuds, **caractérisé en ce que** lesdits noeuds dudit réseau local sont séparés en au moins deux groupes, où les communications entre des noeuds appartenant à l'un des groupes est plus ou moins critique pour la sécurité du véhicule à moteur lors de la conduite de celui-ci par rapport aux communications entre les noeuds d'un autre groupe, et **en ce que** lesdits différents groupes de noeuds sont connectés à différents bus de communication (20, 40, 60), où une extrémité de chaque bus est connectée à un noeud passerelle (12), et **en ce que** le noeud passerelle est adapté pour transférer des informations, à l'intérieur d'un bus, aux noeuds qui sont destinés à recevoir les informations et qui sont connectés à un autre bus.

6. Réseau local selon la revendication 5, dans lequel ledit noeud passerelle (12) comprend une fonctionnalité de pare-feu qui sépare physiquement et logiquement lesdits différents bus de communication (20, 40, 60).

7. Réseau local selon la revendication 5 ou 6, dans lequel le réseau comprend un système d'avertissement, qui émet un signal visuel ou audible en cas d'erreur dans l'un quelconque des noeuds ou l'un quelconque des bus de communication.

8. Réseau local selon l'une quelconque des revendication 5 à 7, dans lequel un bus de communication auquel sont alloués des noeuds dont les communications sont plus critiques est agencé d'une manière plus sûre dans le véhicule par comparaison à un bus de communication auquel sont alloués des noeuds dont les communications sont moins critiques.

9. Véhicule à moteur comprenant un LAN selon l'une quelconque des revendications 5 à 8.
